# EUROPEAN PATENT SPECIFICATION

(11) **EP 2 718 376 B1**
(45) Date of publication and mention of the grant of the patent: **13.12.2017**
(21) Application number: 12730676.9
(22) Date of filing: 07.06.2012
(51) Int. Cl.: C08L 95/00, C09D 195/00

(54) **BITUMINOUS EMULSIONS**
BITUMINÖSE EMULSIONEN
ÉMULSIONS BITUMINEUSES

(30) Priority: 07.06.2011 EP 11168970
(43) Date of publication of application: 16.04.2014
(73) Proprietor: Latexfalt B.V., 2396 AP Koudekerk a/d Rijn (NL)
(72) Inventor: LOMMERTS, Bert Jan, 1703 RB Heerhugowaard (NL); COTIUGA, Irina Manuela, 3521 GZ Utrecht (NL); STRUIK, Jan Willem, 1768 AN Barsingerhorn (NL)
(74) Representative: Nederlandsch Octrooibureau
(86) International application number: PCT/NL2012/050398
(87) International publication number: WO 2012/169890

(56) References cited:
- WO-A1-96/04427
- WO-A1-2009/113854
- WO-A1-2011/034423
- US-A- 2 119 732
- US-A- 2 620 312
- US-A- 3 825 513
- US-A- 4 609 696
- US-A- 5 114 483
- Bert Jan Lommerts ET AL: "Are Bio-Emulsifiers within REACH? - a modified biopolymer additive enabling new asphalt emulsion developments", , 2 October 2008 (2008-10-02), pages 1-18, XP55034455, Retrieved from the Internet: URL:http://dfpcorec-p/wf/storage/138E26733 6F0000480F/originalPdf [retrieved on 2012-08-01]
- "DIN EN 12597. Bitumen und bitumenhaltige Bindermittel - Terminologie = Bitumen and bituminous binders - Terminolgy", DEUTSCHE NORMEN. DIN NORM,, vol. EN-12597, 1 January 2001 (2001-01-01) , pages 102-112, XP009144597,

## Description

### Summary of the invention

The present invention relates to a bituminous emulsion, its preparation and to its application in repairing the surface of an asphalt road construction, in particular of a very open asphalt road construction.

### Background of the invention

In the past, asphalt mixes were dense and usually had a continuous grading of aggregate to reduce the voids volume. Since several decades, however, very open asphalt (or very porous asphalt) is frequently used in the construction of motorways. Very open asphalt has a void volume of about 20% and comprises rather course aggregate material (usually aggregate grade 6/16 mm, but also grades 4/8 mm and 0/16 are used). Also known is double layer very open asphalt, wherein the lower layer comprises course aggregate material (e.g. grade 11/16 mm) and the upper layer fine aggregate material (e.g. grade 4/8 mm). The grade of aggregate materials is determined according to NEN-EN 13043 and is expressed in d/D mm.

Very open asphalt has several advantages over conventional asphalt. For example, water is more easily drained, thereby reducing the runoff from a site and surrounding areas and also reducing splash and spray from passing cars. Moreover, traffic on road constructions having a very open asphalt top-layer produce less noise. However, with their more open structure, roads having a very open asphalt top-layer have a greater tendency to wear by e.g. raveling (loss of aggregate material due to disruption of the bonds between the aggregates) and by enhanced oxidation of the bitumen. As a consequence, very open asphalt top-layers must be replaced about every ten years whereas conventional asphalt top-layers need replacement only after about fifteen years. However, it would be advantageous if the very open asphalt top-layer could be repaired which requires less effort and is more economical than replacement of the complete layer.

Quite often, only the bituminous binder from the 1 - 2 cm top layer of the asphalt construction undergoes embrittlement (loss of ductility) due to oxidative processes and should be replenished. And so, the newly added bitumen should preferably penetrate about 0.5 - 2 aggregate size deep; a convenient way to do that is to spray a bituminous binder composition comprising a rejuvenating agent. The rejuvenating agent has a healing effect on the micro-cracks formed during ageing of the old/existing bituminous binder. The viscosity of the new bituminous binder composition should be low enough to ensure the penetration depth of about 0.5 - 2 aggregate size, but in the same time it should be high enough to create new bonds between the aggregates and to avoid complete dripping in the sub-base layer.

Common bituminous binder compositions usually comprise bitumen, a polymer (frequently an elastomer) and optionally other components like cross-linking agents, fluxing oils, rejuvenating agents (frequently solvents), drying agents (curing agents or siccatives) and the like.

Diluents, e.g. solvents, are added with the purpose of lowering the viscosity of the bituminous binder compositions so that the healing effects are accelerated. While such solvents could be added to the bituminous binder composition, this is undesired because they are environmentally unfriendly and can create a hazardous working environment when the processing temperature is above the flash point of the solvent.

Bituminous binder compositions are also regularly employed in the form of emulsions. However, slow-breaking emulsions are not useful in very open asphalt applications since they easily run off before setting. Further removal of bitumen from the surface of very open asphalt may occur when it starts to rain. Accordingly, fast-breaking bituminous emulsions have so far mostly employed.

US 2.60.312 discloses a blend of an O/W emulsion and a W/O emulsion. The O/W emulsion preferably comprises a bitumen having a high viscosity and a penetration of about 150 to about 300. The continuous phase of the W/O emulsion is preferably a fuel oil. Fuel oils are classified as No. 1 (light) to No. 6 (heavy) oils. No. 5 and No. 6 oils have usually a COC flashpoint below 150°C (P.F. Schmidt, "Fuel Oil Manual", page 103, Industrial Press Inc., 1985).

US 3.825.513 discloses an aqueous emulsion having a plurality of oil phases, wherein a first oil phase (also denoted as "Emulsion A") comprises a petroleum oil substantially free of asphaltenes and of material boiling below about 300°F (≈ 149°C), a resinous, unsaturated nitrogen base and an elastomer, and wherein a second oil phase (also denoted as "Emulsion B") comprises a bitumen, optionally in combination with a fluxing agent, and an elastomer. The bitumen has a penetration of about 40 to about 120 at 77°F (25°C) according to ASTM D 5. The petroleum oil may be a rubber extender oil, preferably extender oils 101 and 102 according to ASTM D 2226, or a blend of high boiling oils. Extender oils are used in the rubber industry to soften rubbers and elastomers. Examples of the petroleum oil are Califlux GP (COC flash point of above 250°C), Califlux 550 (COC flash point of above 250°C), Philrich 5 (flashpoint 465°F ≈ 241°C), Dutrex 739 (flashpoint of 425°C ≈ 218°C) and Dutrex 1786. These oils are (naphthene-)aromatic oils. For example, the content of aromatics in Dutrex 739 is 76%. Califlux GP and Califlux 550 have an unsaturated hydrocarbon content of 70.5 % and 66 %, respectively, according to ASTM D 2000 ("Method of Test for Characteristic Groups in Rubber Extender and Processing Oils by the Precipitation Method"; withdrawn in 1975 and not replaced). Emulsions A and B are useful in bonding soil.

Bituminous emulsions for very open asphalt are known in the art. US 5.114.483 discloses such compositions comprising 80 to 97 wt.% open-graded aggregate material and 3 to 20 wt.% bitumen which are made by successively mixing the aggregate material with two emulsions A and B, respectively. Emulsion A comprises 40 to 75 wt.% of a soft bitumen (with a kinematic viscosity of 50 to 1000 cSt. at 100°C ≈ 210°F), 0.05 to 5 wt.% of an emulsifier and 20 to 59.05 wt.% water as the continuous phase. Emulsion B comprises 40 to 75 wt.% hard bitumen (with a penetration of 5 to 25 10⁻¹ mm at 25°C ≈ 77°F), 0.05 to 5 wt.% of an emulsifier and 20 to 59.05 wt.% water as the continuous phase. Both emulsions A and B are fast-breaking emulsions. It is preferred that first emulsion A is mixed with the aggregate material and then that emulsion B is added. Example 5 of US 5.114.483 discloses that first mixing emulsions A and B followed by blending with an aggregate material leads to a rapid breaking of the emulsions and incomplete coating of the aggregate material. It is concluded that the blend of emulsions A and B are unsuitable for paving.

US 5.910.212 discloses an improvement over the emulsion disclosed in US 5.114.482. US 5.910.212 discloses a method for manufacturing an open-graded asphalt composition, wherein a hard bitumen having a penetration of less than 50 10⁻¹ mm is added to a mixture of a non-emulsified soft bitumen (with a dynamic viscosity of less than 300 mPa.s at 100°C) and aggregate at a temperature of less than 140°C. The hard bitumen may be used in the form of an emulsion which suitably contains less than 50 wt.% of water.

US 5.474.607 and US 5.518.538 disclose a method for manufacturing a bimodal cationic bituminous emulsion for re-sealing roads. The bimodal cationic bituminous emulsion has at least two different particle sizes and a bitumen content of more than 75 wt.%. The bimodal particle distribution would improve packing and stability when compared with a monomodal particle distribution. The bimodal cationic bituminous emulsion is manufactured from two cationic bituminous emulsions which are mixed in an emulsifying apparatus.

WO 96/04427 discloses a process for manufacturing a bituminous cold-mix for road building. The cold-mix is made by mixing an aggregate with a first bituminous emulsion having a high breaking index (e.g. at least 190 according to NFT 66017), wherein a major part of the aggregate particles are coated with bitumen, and mixing the coated aggregate particles with a second bitumen emulsion having a lower breaking index (e.g. 190 or less). It is preferred that the first bituminous emulsion has a particle diameter of 2 to 8 µm. The bitumen employed in the emulsions have a penetration as determined according to NFT 66004 (NFT 66004 is equivalent to ASTM D5; cf. C. Garrigues and P. Vincent, Adv. Chem. 140, "New Uses of Sulfur". Chapter 8, pp 130-153, 1975**;** Chapter DOI: 10.1021/ba-1975-0140.ch008) of 20 to 400 10⁻¹ mm, for example 20 to 80 10⁻¹ mm. Preferably, the bitumen in the fast-breaking emulsion has a penetration of 20 to 80 10⁻¹ mm (for example 35 to 55 or 40 to 50 10⁻¹ mm), whereas the bitumen of the slow-breaking emulsion has a penetration equal or higher than that of the fast-breaking emulsion.

US 6.136.082 discloses a process for manufacturing dense bituminous aggregate mixtures wherein aggregate is coated with a bituminous emulsion. The bituminous emulsion consists of a slow-breaking, cationic or non-ionic emulsion and a fast-breaking cationic emulsion. The slow-breaking emulsion comprises a bituminous binder having a penetration in the range of 20 to 200 10⁻¹ mm whereas the fast-breaking emulsion comprises a bituminous binder having a penetration in the range of 80 to 500 10⁻¹ mm. Example 3 discloses the preparation of an emulsion containing 35/50 bitumen and the emulsifier Polygram® S (CAS No. 68911-79-5; N-tallow alkyltripropylenetetramine) and an emulsion containing 180/220 bitumen and the emulsifier L60 (CAS No. 84082-43-9; Amides, C₈₋₂₂,N-[3-(dimethylamino)propyl]).

WO 96/37660 discloses a method for preparing asphalt materials for cold application which can be used as road construction or road repair material. The asphalt material is prepared by treating aggregate with an anionic bituminous emulsion and a cationic bituminous emulsion.

US 2008/0276834 discloses a bituminous road building material comprising aggregate coated with a bimodal bituminous emulsion, wherein the bituminous emulsion comprises a fraction of 10 to 40 % of bitumen particles having a median diameter of 0.6 µm or less and a fraction of 60 to 90 % of bitumen particles having a median diameter of at least 1 µm. The bitumen binders employed in US 2008/0276834 have a penetration of 70/100 to 500 10⁻¹ mm. A similar bituminous emulsion is known from US 2010/0206197.

Accordingly, in the prior art fast-breaking emulsions based on soft and hard bitumen have been used for manufacturing very open asphalt compositions. In the prior art also emulsions having a bimodal bitumen particle distribution have been employed for manufacturing general asphalt materials, wherein the bitumen may be hard bitumen, soft bitumen, or a combination of hard and soft bitumen.

The present invention, however, provides a emulsion based on hard bitumen and a rejuvenating oil, said emulsion being manufactured from at least two emulsions having a different breaking index.

### Summary of the invention

The present invention relates to a bituminous emulsion obtainable by combining at least an emulsion A and an emulsion B, wherein: (a) emulsion A comprises a bituminous binder having a penetration at 25°C as determined according to NEN-EN 1426 of 1 to 100 10⁻¹ mm and cationic emulsifier, and (b) emulsion B comprises an oil having a flashpoint as determined by the Cleveland open cup method according to NEN-ISO-2592 of 150°C or more, wherein the breaking index of emulsion A is more than 110 and the breaking index of emulsion B is 100 or less, the breaking index being determined according to NEN-EN 13075-1.

The present invention also relates to a process for preparing a bituminous emulsion, wherein at least an emulsion A and an emulsion B are combined, wherein: (a) emulsion A comprises a bituminous binder having a penetration at 25°C as determined according to NEN-EN 1426 of 1 to 100 10⁻¹ mm and a cationic emulsifier, and (b) emulsion B comprises an oil having a flashpoint as determined by the Cleveland open cup method according to NEN-ISO 2592 of 150°C or more, wherein the breaking index of emulsion A is more than 110 and the breaking index of emulsion B is 100 or less, the breaking index being determined according to NEN-EN 13075-1.

The present invention further relates to the use of the bituminous emulsion according to the present invention in surface dressing operations, in particular in road construction, road renovation, joint filling and sealing operations.

The present invention also relates to a process for repairing the surface of an asphalt road construction, wherein:
(a) a bituminous emulsion according to the present invention is applied to the surface of the asphalt road construction;
(b) the applied bituminous emulsion is forced to penetrate the surface of the asphalt road construction; and
(c) sand or gravel is added to the surface of the asphalt road construction.

### Detailed description of the invention

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The term "emulsion" is to be understood as a system in which liquid droplets and/or liquid crystals are dispersed in a liquid. In emulsions the droplets often exceed the usual limits for colloids in size. An emulsion is denoted by the symbol O/W if the continuous phase is an aqueous solution and by W/O if the continuous phase is an organic liquid (an "oil"). More complicated emulsions such as O/W/O (i.e. oil droplets contained within aqueous droplets dispersed in a continuous oil phase or three-phase emulsions) are also included by the term "emulsion". Photographic emulsions, although colloidal systems, are not emulsions in the sense of the term "emulsions" as used in this document (cf. International Union of Pure and Applied Chemistry, Manual of Symbols and Terminology for Physiochemical Quantities and Units, Appendix II, Definitions, Terminology, and Symbols in Colloid and Surface Chemistry, Part 1, web version 2001). The type of emulsion (O/W or W/O) is determined by the volume ratio of the two liquids. For example, with 5% water and 95% oil (an O/W phase ratio of 19), the emulsion is usually W/O.

### The bituminous binder

According to the present invention, the bituminous binder may be a bitumen, a clear synthetic binder, a synthetic resin, a natural resin, and mixtures thereof. The bituminous binder may also be a blend of a bitumen, a clear synthetic binder, a synthetic resin, a natural resin, and mixtures thereof, and an elastomer. However, it is preferred that the bituminous binder is either a bitumen or a blend of a bitumen and an elastomer.

The bitumen may be selected from the group consisting of naphthenic bitumen and paraffinic bitumen. The bitumen has a penetration at 25°C as determined according to NEN-EN 1426 of 1 to 100 10⁻¹ mm. Preferably, the bitumen have a penetration of less than 80 10⁻¹mm, more preferably less than 70 10⁻¹ mm, even more preferably less than 50 10⁻¹ mm, yet even more preferably less than 40 10⁻¹ mm, and in particular less than 35 10⁻¹ mm. Preferably, the bitumen have a penetration of 5 10⁻¹ mm or more, more preferably 10 10⁻¹ mm or more. Most preferably, the bitumen have a penetration in the range of 20 to 30 10⁻¹ mm.

According to a preferred embodiment, the bituminous binder has a softening point as determined according to NEN-EN 1427 of 40° to 110°C, more preferably 45° to 90°C, even more preferably 50° to 70°C.

According to another preferred embodiment, the bituminous binder has a dynamic viscosity of less than 10000 Pa.s at 60°C, the dynamic viscosity being determined according to NEN-EN 13302-2010.

Optionally, the bitumen is a rubber modified bitumen such as Shell Mexphalte RM.

Natural resins and synthetic resins are also well known in the art. These resins include petroleum resins, wherein the petroleum resin is preferably selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics and terpene-based resins. Petroleum resins are generally manufactured by polymerisation of unsaturated hydrocarbons that are present in fractions produced in thermal cracking processes and pyrolysis reactions of hydrocarbon fractions. Optionally, such resins may be post-reacted with hydrogen. Coumaron-indene resins are already known for a considerable period of time and are manufactured by polymerisation of unsaturated hydrocarbons that are present in coal tar distillates. Modified petroleum resins are also well known in the art and are for example manufactured by polymerisation of unsaturated hydrocarbons and unsaturated carboxylic acids or unsaturated carboxylic acid anhydrides such as maleic acid anhydride. Another well known process for manufacturing modified petroleum resins involves grafting techniques. Cyclopentadiene-based resins are generally manufactured by polymerising cyclopentadiene-dimer. Terpene resins are manufactured by polymerisation terpenes, usually monoterpenes that are naturally occurring hydrocarbons and which are usually obtained as byproducts of the paper and citrus industries.

Clear synthetic binders are well known in the art and a commercially available product is Shell Mexphalte C.

According to an embodiment of the present invention, the bituminous binder is a polymer-modified bitumen, i.e. that the bituminous binder comprises bitumen and an elastomer. According to this embodiment, the bituminous binder comprises 0.1 to 25 wt.% of the elastomer, more preferably 0.5 to 15 wt.%, even more preferably 5 to 8 wt.%, based on the total weight of the bitumen and the elastomer. Such polymer-modified binders are well known in the art and commercially available products include Shell Cariphalte XS or Total Styrelf.

Preferably, the elastomer is selected from the group consisting of ethylene-vinyl acetate copolymers, polybutadienes, ethylene-propylene copolymers, ethylene-propylene-diene copolymers, butadiene-styrene diblock copolymers, butadiene-styrene-butadiene triblock copolymers, isoprene-styrene diblock copolymers, isoprene-styrene-isoprene triblock copolymers, wherein the diblock or triblock copolymers may occur in morphological shapes as star-shaped polymers wherein a cross-linking agent such as divinyl benzene is employed in the manufacturing process. However, according to the present invention, it is preferred that the elastomer is a polymer or a resin comprising two adjacent, optionally substituted butadiene units such as isoprene, most preferably a polybutadiene, a butadiene-styrene diblock copolymer, a styrene-butadiene-styrene triblock terpolymer, a isoprene-styrene diblock copolymer or a styrene-isoprene-styrene triblock terpolymer. More preferably, the elastomer is a polybutadiene or a styrene-butadiene-styrene triblock terpolymer, in particular because of their good compatibility with bitumen and its excellent visco-elastic properties.

### The oil

According to the present invention, the oil has a flashpoint of 150°C or more as determined by the Cleveland open cup method (NEN-ISO 2592) which is equivalent to ASTM D 92. Preferably, the flashpoint is at least 170°C, more preferably at least 180°C, and even more preferably at least 200°C. There is no particularly preferred upper limit for the flash point of the oil, but it will in general be not higher than 400°C.

Preferably, the oil is selected from the group consisting of vegetable oils, animal oils and mineral oils. The vegetable oils may be "boiled" or "blown", i.e. that they are (partly) cross-linked. Herein, "blown" means that the oil is (partly) cross-linked by oxygen.

The vegetable oils and the animal may be oils as such or chemically modified oils, e.g. modified by transesterification and/or hydrogenation. Chemically non-modified vegetable oils are well known in the art and include linseed oil, linola oil, castor oil, coconut oil, cottonseed oil, peanut oil, olive oil, soybean oil, tall oil, tung oil, oitica oil, corn oil, safflower oil, sunflower oil, sesame oil, rapeseed oil, hemp oil, perilla oil, poppyseed oil, rubberseed oil and walnut oil. Chemically non-modified animal oils include tallow oil, lard and fish oil. Chemically modified oils include rapeseed methyl ester oil (flashpoint of about 188°C) and linseed methyl ester oil (flashpoint of about 186°C).

The cross-linked vegetable oil is obtainable from glycerol tri-esters comprising one, two or three (multi)unsaturated C₁₀ - C₃₀ fatty acid chains. The oils of natural origin are those extracted from seeds or trees and are for example selected from the oils listed above.

It is known that tung oil (which comprises about 80 % of the conjugated (9*Z*,11*E*,13*E*)-octadeca-9,11,13-trienoic acid) "dries" (i.e. cross-links) more readily than linseed oil (which comprises about 50 % of the non-conjugated (9*Z*,12*Z*,15*Z*)-octadeca-9,12,15-trienoic acid). Linseed oil cross-links more readily than soybean oil (which comprises about 10 % of non-conjugated the non-conjugated (9*Z*,12*Z*,15*Z*)-octadeca-9,12,15-trienoic acid). However, tung oil is produced in only minor quantities whereas linseed oil and soybean oil are commodities.

According to the present invention, the cross-linked vegetable oils are preferably selected from the group consisting of castor oil, rapeseed oil, linseed oil, soybean oil, sunflower oil and safflower oil. The most preferred cross-linked oil is linseed oil. Cross-linked linseed oil (also known as "boiled" linseed oil; cf. for example T. Gallagher, D.E. Kline and P.R. Blankenhorn, J. Am. Oil Chem. Soc. 54, 68 - 70, 1977) has a flashpoint of about 296°C (as determined by the Cleveland open cup method; NEN-ISO 2592 which is equivalent with ASTM D92).

The mineral oils are preferably selected from brightstock, e.g. furfural extracted brightstock, and napthenic oils. Suitable examples include Shell BFE (formerly known as Shellflex 954 HP) which has a flash point of about 332°C, Plaxolene of Total which has a flashpoint of about 300°C, L 500 of Cross Oil Refining & Marketing, Inc., Smakcover, Arkansas, which has a flashpoint of about 195°C and T 4000 from Nynas which has a flashpoint of about 225°C.

The oils preferably have a penetration at 25°C higher than 500 10⁻¹ mm, and therefore cannot be measured according to NEN-EN 1426. Higher penetration of the oils, which can be translated into oils having lower viscosities, is desired due to an increased diffusion coefficient of these oils into aged binder.

### Emulsion A

Preferably, emulsion A comprises 25 to 75 wt.% of an aqueous phase and 75 to 25 wt.% of an oil phase, based on the total weight of emulsion A.

It is preferred that emulsion A comprises 40; to 80 wt.%, preferably 50 to 70 wt.% of the bituminous binder, based on the total weight of emulsion A.

Emulsion A is a cationic emulsion. Emulsion A preferably comprises 0.1 to 20 wt.% of a cationic emulsifier, preferably 0.2 to 10 wt.%, more preferably 0.2 to 5.0 wt.%, based on the total weight of the aqueous phase of emulsion A.

### Emulsion B

Preferably, emulsion B comprises 25 to 75 wt.% of an aqueous phase and 75 to 25 wt.% of an oil phase, based on the total weight of emulsion B.

It is preferred that emulsion B comprises 40; to 80 wt.% of the oil, preferably 50 to 70 wt.%, based on the total weight of emulsion B. It is preferred that emulsion B is a cationic emulsion. Emulsion B preferably comprises 0.1 to 20 wt.% of a cationic emulsifier, preferably 0.2 to 10 wt.%, more preferably 0.2 to 5.0 wt.%, based on the total weight of the aqueous phase of emulsion B.

### The bituminous emulsion

According to the present invention, the bituminous emulsion is obtained by combining at least an emulsion A and an emulsion B. The bituminous emulsion is obtained by combining at least two emulsions having a different breaking index. Emulsion A has a higher breaking index than emulsion B, wherein the breaking indices are determined according to the standard test method NEN-EN 13075-1. In particular, emulsion A has a higher breaking index than emulsion B which enables emulsion B to break first which provides a healing effect to the aged bituminous binder, as well as precoats the aggregates, whereas emulsion A (which breaks slower) provides new bridges between aggregate material (which prevents raveling).

Emulsion A has a breaking index (25 °C) of more than 110, preferably more than 110 to 150, whereas emulsion B has a breaking index (25 °C) of 100 or less, preferably 40 to 100.

### Applications

The bituminous emulsion according to the present invention can be suitably used in surface dressing operations, wherein the surface dressing operation is preferably selected from the group consisting of road construction, road renovation, joint filling and sealing operations. More preferably, the road renovation is renovation of a layer of very open asphalt.

The present invention further provides a process for repairing the surface of an asphalt road construction, wherein a bituminous emulsion according to the invention is applied to the surface of the asphalt road construction. Preferably, the bituminous emulsion penetrates 0.5 to 2 aggregate size of the surface of the asphalt road construction. According to the invention, the surface of the asphalt road construction is preferably the surface of very open asphalt.

Accordingly, the present invention also relates to a process for repairing the surface of an asphalt road construction, wherein a bituminous emulsion which is obtainable by combining at least an emulsion A and an emulsion B, wherein: (a) emulsion A comprises a bituminous binder having a penetration at 25°C as determined according to NEN-EN 1426 of 1 to 100 10⁻¹ mm and a cationic emulsifier, and (b) emulsion B comprises an oil having a flashpoint as determined by the Cleveland open cup method according to NEN-ISO 2592 of 150°C or more, wherein the breaking index of emulsion A is more than 110 and the breaking index of emulsion B is 100 or less, the breaking index being determined according to NEN-EN 13075-1, is applied to the surface of the asphalt road construction.

According to an embodiment of this process, the bituminous emulsion is applied, preferably by spraying, at a temperature of 60° to 70°C onto the surface of an asphalt road construction, preferably the surface of a very open asphalt road construction. The amount of the bituminous emulsion that is used is 0.2 to 1.2 kg/m², preferably 0.3 to 0.8 kg/m². The very open asphalt road construction is three to twenty years old. Subsequently, the bituminous emulsion is forced to penetrate the surface of the asphalt road construction so as to wet the aggregate by means of a suitable device, e.g. a wet rubber tired roller or a compactor equipped with rubber tires on which water is applied so the rubber tires are pushing the binder further into the open graded asphalt and the water film prevents significant uptake of the binder from the road surface, a truck equipped with a rubber flap, or by means of a sweeping or brushing device provided with steel or polymer brushes are employed which can for example be towed by a truck, wherein the bituminous emulsion penetrates the surface for 0.5 to 2 aggregate size. This is preferably done within a period of 0.5 s to 1 minute after that the bituminous emulsion is applied.

In a next step, sand or gravel is added to improve the roughness of the surface and to obtain the required anti-skid performance.

Accordingly, the present invention also relates to a process for repairing the surface of an asphalt road construction, in particular the surface of a very open asphalt road construction, the process comprising the steps of: (1) applying a bituminous emulsion according to the present invention to said surface, and (2) forcing the applied bituminous binder to penetrate the surface of the asphalt road construction, and (3) adding sand or gravel to said surface.

In this process, it is preferred that the bituminous emulsion is applied at a temperature of 60° to 70°C. The bituminous emulsion is preferably applied in an amount of 0.2 to 1.2 kg/m², preferably 0.3 to 0.8 kg/m².

### Examples

### Example 1

A bitumen containing emulsion A was prepared according to the following general procedure. To 99.009 units of weight of water at a temperature of about 60°C, 0.467 units of weight of a 30% hydrochloric acid solution was added whilst gently stirring. Next, 0.324 units of weight of Redicote® E9 fatty amine emulsifier (purchased from Akzo Nobel) were added to the water. Subsequently, 0.2 wt.% BioStabMY (produced by Latexfalt, Koudekerk a/d Rijn, the Netherlands; BioStabMY is a multi-component masterbatch for the stabilisation of cationic emulsions) was added. The aqueous mixture and the appropriate bitumen, i.e. Total bitumen with a penetration ranging from 20-30 10⁻¹ mm (Total refinery Dunkirk, France) were fed to an emulsion mill (a Trigonal Mill obtained from Siefer Machinenfabrik GmbH & Co KG) and were emulsified to an oil in water (O/W) emulsion having a water content of about 40 - 42 wt.% water, based on the total weight of the emulsion. The storage stability was determined after seven days. The composition and properties of the emulsion is summarised in Table 1.

**Table 1**

| Emulsion A | |
|---|---|
| Aqueous phase | Total amount: 100.00 wt.% |
| | 99.009 wt.% H₂O |
| | 0.457 wt.% HCl (30 %) |
| | 0.324 wt.% Redicote® E9 |
| | 0.21 wt.% BioStabMY |
| Oil phase | Total amount: 100.00 wt.% |
| | Bitumen (20-30 10⁻¹ mm) |

| Emulsion properties | |
|---|---|
| Viscosity^{a} (STV 2 mm, 40 °C) | 25-50 s |
| Breaking Index^{b} | 100 - 130 |
| Bitumen content (wt.%) | 58 - 60 |
| pH | 2 - 2.3 |

| | |
|---|---|
| ^{a} Measured in a viscosity flow cup. The measured kinematic viscosity is measures in seconds of flow time which can be converted into cSt using a viscosity disc calculator. ^{b} NEN-EN 13075-1. | |

A second emulsion B was prepared according to the general procedure from BFE (Shell), 30% hydrochloric acid, Redicote® E9 fatty amine emulsifier and BioStabMY. The water content was about 43 - 47 wt.% water, based on the total weight of the emulsion. The composition and properties of the emulsion is summarised in Table 2.

**Table 2**

| Emulsion B | |
|---|---|
| Aqueous phase | Total amount: 100.00 wt.% |
| | 99.514 wt.% H₂O |
| | 0.23 wt.% HCl (30 %) |
| | 0.116 wt.% Redicote® E9 |
| | 0.14 wt.% BioStabMY |
| Oil phase | Total amount: 100.00 wt.% |
| | BFE (Shell) |

| Emulsion properties: | |
|---|---|
| Viscosity^{a} (STV 2 mm, 40 °C) | 25-35 sec |
| Breaking Index^{b} | 80 - 100 |
| Bitumen content (wt.%) | 54 - 57 |
| pH | 2 - 2.3 |

| | |
|---|---|
| ^{a}Measured in a viscosity flow cup. The measured kinematic viscosity is measures in seconds of flow time which can be converted into cSt using a viscosity disc calculator. ^{b} NEN-EN 13075-1. | |

These emulsions were mixed to a mixed emulsion in a weight ratio of 85 parts by weight of emulsion A and 15 parts by weight of emulsion B. The emulsion was sprayed onto an approximately five years old very open asphalt. The treatment was performed in collaboration with Heijmans on highway A50, near the town of Hoenderloo, the Netherlands, under the following weather conditions: air temperature was about 5° to about 7 °C and the relative humidity was about 70 to about 80 %.

The rate of application using a spraying unit was about 0.8 kg/m². In order to provide sufficient anti-skid performance, the bitumen film was sanded using a 0/3 mm sand fraction; the sand was applied before the bitumen was completely precipitated from the emulsion phase. After sanding, the excess bituminous materials were removed from the surface of the very open asphalt by using a hot-air blowing device.

## Claims

1. Bituminous emulsion obtainable by combining at least an emulsion A and an emulsion B, wherein: (a) emulsion A comprises a bituminous binder having a penetration at 25°C as determined according to NEN-EN 1426 of 1 to 100 10⁻¹ mm and a cationic emulsifier, and (b) emulsion B comprises an oil having a flashpoint as determined by the Cleveland open cup method according to NEN-ISO 2592 of 150°C or more, wherein the breaking index of emulsion A is more than 110 and the breaking index of emulsion B is 100 or less, the breaking index being determined according to NEN-EN 13075-1.

2. Bituminous emulsion according to Claim 1, wherein the bituminous binder has a softening point as determined according to NEN-EN 1427 of 40° to 110°C.

3. Bituminous emulsion according to Claim 1 or Claim 2, wherein the bituminous binder has a dynamic viscosity of less than 10000 Pa.s at 60°C.

4. Bituminous emulsion according to any one of Claims 1 - 3, wherein the oil is a vegetable oil, an animal oil or a mineral oil.

5. Bituminous emulsion according to any one of Claims 1 - 4, wherein the breaking index of emulsion A is more than 110 to 150.

6. Bituminous emulsion according to any one of Claims 1 - 4, wherein the breaking index of emulsion B is 40 to 100.

7. Bituminous emulsion according to any one of Claims 1 - 6, wherein Emulsion B is a cationic emulsion.

8. Process for preparing a bituminous emulsion, wherein at least an emulsion A and an emulsion B are combined, wherein: (a) emulsion A comprises a bituminous binder having a penetration at 25°C as determined according to NEN-EN 1426 of 1 to 100 10⁻¹ mm and a cationic emulsifier, and (b) emulsion B comprises an oil having a flashpoint as determined by the Cleveland open cup method according to NEN-ISO 2592 of 150°C or more, wherein the breaking index of emulsion A is more than 110 and the breaking index of emulsion B is 100 or less, the breaking index being determined according to NEN-EN 13075-1.

9. Use of the bituminous emulsion according to any one of Claims 1 - 7 in surface dressing operations.

10. Use according to Claim 9, wherein the surface dressing operation is selected from the group consisting of road construction, road renovation, joint filling and sealing operations.

11. Use according to Claim 10, wherein the road renovation is renovation of a layer of very open asphalt.

12. Process for repairing the surface of an asphalt road construction, wherein:
(a) a bituminous emulsion according to any one of Claims 1 - 7 is applied to the surface of the asphalt road construction;
(b) the applied bituminous emulsion is forced to penetrate the surface of the asphalt road construction; and
(c) sand or gravel is added to the surface of the asphalt road construction.

13. Process according to Claim 12, wherein forcing the applied bituminous emulsion to penetrate the surface of the asphalt road construction is conducted by using a wet rubber tired roller, a compactor equipped with rubber tires on which water is applied, a truck equipped with a rubber flap, or a sweeping or brushing device provided with steel or polymer brushes.

14. Process according to Claim 12 or Claim 13, wherein the surface of the asphalt road construction is the surface of very open asphalt.

## Patentansprüche

1. Bituminöse Emulsion, die durch Kombinieren mindestens einer Emulsion A und einer Emulsion B erhältlich ist, wobei: (a) Emulsion A bituminöses Bindemittel mit einer Penetration bei 25°C, wie bestimmt gemäß NEN-EN 1426, von 1 bis 100 10⁻¹ mm und kationischen Emulgator umfasst, und (b) Emulsion B Öl mit einem Flammpunkt, wie bestimmt durch das Cleveland-Verfahren mit offenem Becher gemäß NEN-ISO 2592, von 150°C oder höher umfasst, wobei der Brechindex der Emulsion A größer als 110 ist und der Brechindex der Emulsion B 100 oder kleiner ist, wobei der Brechindex gemäß NEN-EN 13075-1 bestimmt wird.

2. Bituminöse Emulsion nach Anspruch 1, bei der das bituminöse Bindemittel einen Erweichungspunkt, wie bestimmt gemäß NEN-EN 1427, von 40°C bis 110°C aufweist.

3. Bituminöse Emulsion nach Anspruch 1 oder Anspruch 2, bei der das bituminöse Bindemittel eine dynamische Viskosität kleiner als 10000 Pa.s bei 60°C aufweist.

4. Bituminöse Emulsion nach einem der Ansprüche 1 bis 3, bei der das Öl ein pflanzliches Öl, ein tierisches Öl oder ein Mineralöl ist.

5. Bituminöse Emulsion nach einem der Ansprüche 1 bis 4, bei der der Brechindex der Emulsion A größer als 110 bis 150 ist.

6. Bituminöse Emulsion nach einem der Ansprüche 1 bis 4, bei der der Brechindex der Emulsion B 40 bis 100 beträgt.

7. Bituminöse Emulsion nach einem der Ansprüche 1 bis 6, bei der Emulsion B eine kationische Emulsion ist.

8. Verfahren zur Herstellung einer bituminöse Emulsion, bei dem mindestens eine Emulsion A und eine Emulsion B kombiniert werden, wobei: (a) Emulsion A bituminöses Bindemittel mit einer Penetration bei 25°C, wie bestimmt gemäß NEN-EN 1426, von 1 bis 100 10⁻¹ mm und kationischen Emulgator umfasst, und (b) Emulsion B Öl mit einem Flammpunkt, wie bestimmt durch das Cleveland-Verfahren mit offenem Becher gemäß NEN-ISO 2592, von 150°C oder höher umfasst, wobei der Brechindex der Emulsion A größer als 110 ist und der Brechindex der Emulsion B 100 oder kleiner ist, wobei der Brechindex gemäß NEN-EN 13075-1 bestimmt wird.

9. Verwendung der bituminösen Emulsion gemäß einem der Ansprüche 1 bis 7 in Oberflächenbehandlungsvorgängen.

10. Verwendung nach Anspruch 9, bei der der Oberflächenbehandlungsvorgang aus der Gruppe bestehend aus Straßenbau, Straßenrenovierung, Fugenfüllung und Abdichtungsvorgängen ausgewählt ist.

11. Verwendung nach Anspruch 10, bei der die Straßenrenovierung eine Renovierung einer Schicht von offenporigem Asphalt ist.

12. Verfahren zur Reparatur der Oberfläche einer Asphaltstra-ßenkonstruktion, bei dem:
(a) bituminöse Emulsion gemäß einem der Ansprüche 1 bis 7 auf die Oberfläche der Asphaltstraßenkonstruktion aufgebracht wird,
(b) die bituminöse Emulsion gezwungen wird, in die Oberfläche der Asphaltstraßenkonstruktion einzudringen, und
(c) Sand oder Schotter auf die Oberfläche der Asphaltstraßenkonstruktion gegeben wird.

13. Verfahren nach Anspruch 12, bei dem das Zwingen der aufgebrachten bituminösen Emulsion zum Eindringen in die Oberfläche der Asphaltstraßenkonstruktion durchgeführt wird, indem eine nasse gummibereifte Walze, ein Verdichter, der mit Gummireifen ausgestattet ist, auf die Wasser aufgebracht wird, ein Lastwagen, der mit einer Gummiklappe ausgestattet ist, oder eine Wisch- oder Bürstvorrichtung, verwendet wird, die mit Stahl- oder Polymerbürsten versehen ist.

14. Verfahren nach Anspruch 12 oder Anspruch 13, bei dem die Oberfläche der Asphaltstraßenkonstruktion die Oberfläche von offenporigem Asphalt ist.

## Revendications

1. Emulsion bitumineuse pouvant être obtenue en combinant au moins une émulsion A et une émulsion B, dans laquelle:
(a) l'émulsion A comprend un liant bitumineux dont la pénétration à 25°C, déterminée selon la norme NEN-EN 1426, est de 1 à 100.10⁻¹ mm, et un émulsifiant cationique, et
(b) l'émulsion B comprend une huile présentant un point d'éclair, déterminé par le procédé à vase ouvert de Cleveland selon la norme NEN-ISO 2592, égal ou supérieur à 150°C,
dans laquelle l'indice de rupture de l'émulsion A est supérieur à 110 et l'indice de rupture de l'émulsion B est égal ou inférieur à 100, l'indice de rupture étant déterminé selon la norme NEN-EN 13075-1.

2. Emulsion bitumineuse selon la revendication 1, dans laquelle le liant bitumineux présente un point de ramollissement, déterminé selon la norme NEN-EN 1427 allant de 40° à 110°C.

3. Emulsion bitumineuse selon la revendication 1 ou la revendication 2, dans laquelle le liant bitumineux présente une viscosité dynamique inférieure à 10000 Pa.s à 60°C.

4. Emulsion bitumineuse selon l'une quelconque des revendications 1 à 3, dans laquelle l'huile est une huile végétale, une huile animale ou une huile minérale.

5. Emulsion bitumineuse selon l'une quelconque des revendications 1 à 4, dans laquelle l'indice de rupture de l'émulsion A est supérieur à 110 à 150.

6. Emulsion bitumineuse selon l'une quelconque des revendications 1 à 4, dans laquelle l'indice de rupture de l'émulsion B est de 40 à 100.

7. Emulsion bitumineuse selon l'une quelconque des revendications 1 à 6, dans laquelle l'émulsion B est une émulsion cationique.

8. Procédé de préparation d'une émulsion bitumineuse dans lequel on combine au moins une émulsion A et une émulsion B,
dans lequel:
(a) l'émulsion A comprend un liant bitumineux dont la pénétration à 25°C, déterminée selon la norme NEN-EN 1426, est de 1 à 100.10⁻¹ mm, et un émulsifiant cationique, et
(b) l'émulsion B comprend une huile présentant un point d'éclair, déterminé par le procédé à vase ouvert de Cleveland selon la norme NEN-ISO 2592, égal ou supérieur à 150°C,
dans laquelle l'indice de rupture de l'émulsion A est supérieur à 110 et l'indice de rupture de l'émulsion B est égal ou inférieur à 100, l'indice de rupture étant déterminé selon la norme NEN-EN 13075-1.

9. Utilisation d'une émulsion bitumineuse selon l'une quelconque des revendications 1 à 7, dans les opérations d'enduit superficiel.

10. Utilisation selon la revendication 9, dans laquelle l'opération d'enduit superficiel est choisie dans le groupe consistant en travaux de construction de routes, de rénovations de routes, de remplissage de joints et d'étanchéité.

11. Utilisation selon la revendication 10, dans laquelle la rénovation de routes est la rénovation d'une couche d'asphalte très poreux.

12. Procédé pour réparer la surface d'une construction routière en asphalte dans laquelle:
a) une émulsion bitumineuse selon une quelconque des revendications 1 à 7 est appliquée à la surface de la construction routière en asphalte,
b) l'émulsion bitumineuse appliquée est forcée à pénétrer la surface de la construction routière en asphalte, et
c) le sable ou le gravier sont ajoutés à la surface de la construction routière en asphalte.

13. Procédé selon la revendication 12, dans lequel pour forcer l'émulsion bitumineuse appliquée à pénétrer la surface de la construction routière en asphalte, on utilise un rouleau à tambour en caoutchouc humide, un compacteur équipé de pneus en caoutchouc sur lesquels de l'eau est appliquée, un camion équipé d'un volet en caoutchouc ou un dispositif de balayage ou de brossage muni de brosses en acier ou en un polymère.

14. Procédé selon la revendication 12 ou la revendication 13, dans lequel la surface de la construction routière en asphalte est une surface d'asphalte très poreux.
